# EUROPEAN PATENT APPLICATION

(11) **EP 1 331 633 A2**
(43) Date of publication of application: **30.07.2003**
(21) Application number: 03250502.6
(22) Date of filing: 28.01.2003
(51) Int. Cl.: G11B 7/09

(54) **Optical pickup actuator**

(30) Priority: 28.01.2002 JP 2002018289
(71) Applicant: Mitsumi Electric Co., Ltd., Tama-Shi, Tokyo (JP)
(72) Inventor: Hori, Ken'ichi, c/o Mitsumi Electric Co., Ltd., Tama-shi, Tokyo (JP)
(74) Representative: Moir, Michael Christopher

(57) **Abstract**

An optical pickup actuator comprises a movable portion (10), including a lens holder (12) for holding an object lens (11), and also comprises a damper base for supporting the movable portion through a plurality of suspension wires (34) extending from both sides thereof to allow the movable portion to shift up and down and right and left. The movable portion (10) is made of a liquid crystal polymer (40) which is material having, after being injection molded, a surface layer (41) harder than a region (42) interior of the surface layer. The movable portion has a non-flat surface (a wavelike surface shape) with a surface area larger than if it were flat.

## Description

### Background of the Invention:

This invention relates to an optical pickup for use in an optical disc drive for recording/reproducing data to/from an optical recording medium such as an optical disc and, in particular, to an optical pickup actuator for movably supporting an object lens up and down and right and left (in focusing and tracking directions).

In the manner known in the art, electric equipment such as a personal computer is connected to various peripheral units one of which comprises a memory device or a recording medium. In addition, there are various types of memory devices (recording media). In other words, the memory devices (recording media) are classified into removable media and non-removable media. One of the removable media comprises an optical disc. A wide variety of optical discs have been known. For example, an audio CD (CD-DA: compact disc digital audio), a CD-ROM (compact disc-read only memory), a CD-R (compact disc recordable), a CD-RW (compact disc rewritable), a DVD-ROM (digital versatile disc read only memory), a DVD-R (digital versatile disc recordable), a DVD-RAM (digital versatile disc random access memory), or a DVD-RW (digital versatile rewritable) has been known as the optical disc.

Now, in order to write information (data) in such as an optical disc and to read the information (data) from the optical disc, a recording/reproducing optical pickup is required for irradiating a laser beam on the optical disc.

In general, the optical pickup of the type described comprises a laser optical source for emitting the laser beam and an optical system for guiding the emitted laser beam to the optical disc. The optical system includes, for example, a diffraction grating, a beam splitter, a collimating lens, and an object lens.

It is possible for the CD-R or like apparatus to carry out not only reading of information but also writing of information. In the optical pickup for the CD-R or like apparatus, it is necessary to change output power of the laser beam emitted from the laser optical source between the reading operation and the writing operation. This is because writing information is carried out by forming a pit in a recording layer of the optical disc by irradiating of the laser beam. Accordingly, the output (power) of the laser beam on writing information is larger than that on reading information and is, for example, ten to twenty times as large as than on reading information.

Now, in such an optical pickup, recording (writing) and erasing of information is carried out by passing the laser beam emitted from the laser optical source through the optical system and by concentrating the laser beam on a signal recording layer of the optical disc (for instance, CR-R) by the object lens of the optical system. On the other hand, reproducing information is carried out by also passing a reflected laser beam (return laser beam) from the signal recording layer through the optical system and by receiving the reflected laser beam by an optical detector (a photodiode).

Inasmuch as the optical disc drive carries out recording/reproducing of information for the optical disc by using the laser beam emitted from the optical pickup, it is indispensable to carry out focusing control and tracking control. In order to carry out the focusing control and the tracking control, the optical pickup comprises an optical pickup actuator for shifting the above-mentioned object lens up and down and right and left (focusing and tracking directions).

The optical pickup actuator comprises a movable portion including a lens holder for holding the object lens and a damper base for shiftably supporting the movable portion up and down and right and left through a plurality of suspension wires. Accordingly, each of the plurality of suspension wires has one end fixed to the movable portion and another end fixed to the damper base.

Now, high speed operation is required in the optical pickup year after year. With this, it is necessary to the lens holder of the optical pickup actuator to have high stiffness or rigidity.

On the other hand, although the lens holder has high stiffness, it is not suitable to operate the optical pickup at a high speed if the movable portion including the lens holder has heavy weight. It is therefore preferable to select, as material of the lens holder (the movable portion), light and hard resin material. In prior art, liquid crystal polymer (LCP) is generally used as such resin material.

However, in a known optical pickup actuator, the movable portion is made by injection molding merely using the liquid crystal polymer as the resin material without devising for a shape of the movable portion. That is, the movable portion has a flat surface. It is therefore difficult for the known optical pickup actuator to raise the stiffness of the movable portion without increasing volume and weight of the movable portion.

### Summary of the Invention:

It is therefore an object of the preferred embodiment of this invention to provide an optical pickup actuator including a movable portion which has increased stiffness without increased volume and weight.

In this invention, an optical pickup actuator includes a movable portion including a lens holder for holding an object lens and a damper lens for supporting the movable portion through a plurality of suspension wires to allow the movable portion to shift up and down and right and left. The suspension wires extend from both sides of the movable portion. According to an aspect of this invention, in the above-mentioned optical pickup actuator, the movable portion is made of material which has a nature where a surface layer thereof is harder than the inside thereof on injection molding and the movable portion has a shape where a surface area thereof is larger than that of a flat surface.

And in this invention, a molding product is molded by using material which has a nature where a surface layer thereof is harder than the inside thereof on injection molding. According to an aspect of this invention, the afore-mentioned molding product has a shape where a surface area thereof is larger than that of a flat surface.

The material of the above-mentioned movable portion (molding product) may be, for example, liquid crystal polymer. In addition, a surface shape of the above-mentioned movable portion (molding product) may be, for example, a wavelike shape. The term wavelike here is used broadly to include any generally undulating, corrugated or castellated shape.

### Brief Description of the Drawings:

Preferred features of present invention will now be described, by way of example only, with reference to the accompanying drawings, in which:-
Fig. 1 is a schematic view showing the inside of a liquid crystal polymer used as material for a movable portion of an optical pickup actuator to which this invention is applicable;
Fig. 2 is a plan view of an optical pickup actuator according to an embodiment of this invention;
Fig. 3 is a rear elevation of the optical pickup actuator illustrated in Fig. 2;
Fig. 4 is an enlarged detail of a portion C enclosed by a circle in Fig. 2; and,
Fig. 5 is an enlarged sectional view of the portion C enclosed by the circle in Fig. 2.

### Description of the Preferred Embodiment:

In a case where liquid crystal polymer, as resin material, is used in molding of a movable portion, the present inventor studied how to finish a shape of the movable portion in order to effectively raise stiffness of the movable portion without increasing volume and weight of the movable portion. The present inventor turned his attention to the structure (nature) of the liquid crystal polymer.

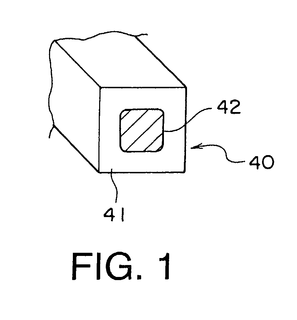

As shown in Fig. 1, the liquid crystal polymer depicted at 40 is divided between two layers, namely, a hard surface layer 41 and a soft inside layer 42. The hard surface layer 41 is called a skin while the soft inside layer 42 is called a nonorientation core. The hard surface layer 41 comprises resin components whose directions are oriented in a predetermined direction. The soft inside layer 42 comprises resin components whose directions are not regular. Hardness of a part of the surface layer 41 mainly contributes to the stiffness of the liquid crystal polymer 40.

Accordingly, the present inventor arrived at the idea that it may be possible to effectively improve stiffness of the movable portion without increasing volume and weight of the movable portion if the movable portion has a shape such that much of the surface layer 41 occupies in the movable portion on injection molding of the movable portion by using the liquid crystal polymer. That is, when the movable portion has a wider (larger) surface area, a ratio of the skin in the total of volume of the movable portion become higher and it results in arising the stiffness of the movable portion. A method of making the surface area of the movable portion wide (large) is, for example, to make a surface of the movable portion a wavelike shape without flat. In addition, to mold such as a product having a surface of a wavelike shape may only to work an inner wall surface of a die (mold) for use in manufacturing the movable portion into a wavelike shape.

In addition, from this point of view, it is understood that the resin material (molding material) of the movable portion is not restricted to the liquid crystal polymer and may be material having a nature where a surface layer thereof is hard and the inside thereof is soft on injection molding.

Furthermore, it is clear that this invention is not restricted to the movable portion of the optical pickup actuator and may be applicable to a general molding product.

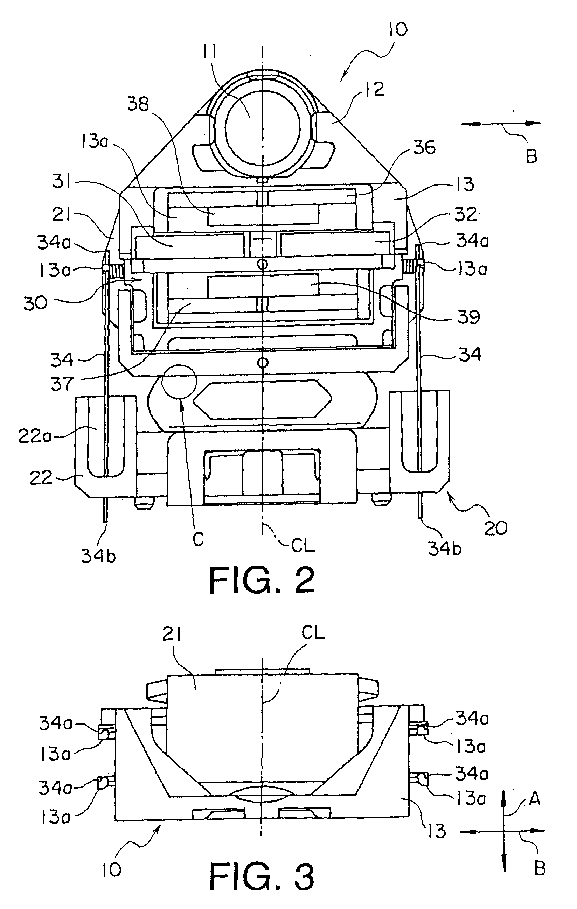

Referring to Figs. 2 and 3, the description will proceed to an optical pickup actuator according to an embodiment of this invention. Fig. 2 is a plan view showing the optical pickup actuator. Fig. 3 is a rear elevation of the optical pickup actuator.

The illustrated optical pickup actuator comprises a movable portion 10 composing a part of an optical head (optical pickup), a fixed portion 20 for movably supporting the movable portion 10 up and down (in a focusing direction) and right and left (in a tracking direction), and a driving unit 30 mounted therein.

The movable portion 10 comprises an object lens 11, a lens holder 12 for holding the object lens 11, and a holding portion 13 for fixedly holding the lens holder 12 so as to be integrated with the lens holder. The holding portion 13 has a hole portion 13a at a center portion thereof. The driving unit 30 is mounted in the hole portion 13a. The driving unit 30 is divided into a movable part and a fixed part.

The movable part of the driving unit 30 comprises first and second tracking coils 31 and 32 and a focusing coil (not shown). The first and the second tracking coils 31 and 32 are held in the holding portion 13. Each of the first and the second tracking coils 31 and 32 is wounded in a vertical direction. The first and the second tracking coils 31 and 32 are symmetrically mounted in the holding portion 13 with respect to a central line CL. On the other hand, the focusing coil is held in the holding portion 13 in the vicinity of the first and the second tracking coils 31 and 32 in a direction of the central line CL. The focusing coil is wound in a horizontal direction. The fixed part of the driving unit 30 will later be described.

At both sides of the holding portion 13, four suspension wires 34 are disposed two by two up and down. Each of the suspension wires 34 is made of a rod or a wire member having elasticity. Each suspension wire 34 has one end 34a fixed in the holding portion at a projection 13a which is outwardly projected in the horizontal direction. Each suspension wire 34 has another end 34b fixed in a damper base (which will be later described) composing the fixed portion 20.

The fixed portion 20 comprises an actuator base 21 and the damper base depicted at 22. The actuator base 21 has a substantially rectangular frame structure made of metallic magnetic material.

Disposed in the hole portion 13a of the holding portion 13, the fixed part of the driving unit 30 comprises first and second yokes 36 and 37 and first and second permanent magnets 38 and 39. The first and the second yokes 36 and 37 are made of a part of the actuator base 21 and are stood from the actuator base. The first and the second tracking coils 31 and 32 and the focusing coil are disposed between the first and the second yokes 36 and 37. The first permanent magnet 38 is attached on a surface of the first yoke 36 that is opposite to the first and the second tracking coils 31 and 32. The second permanent magnet 39 is attached on a surface of the second yoke 37 that is opposite to the focusing coil. A combination of the first yoke 36 and the first permanent magnet 38 serves as a first fixed magnet portion while a combination of the second yoke 37 and the second permanent magnet 39 serves as a second fixed magnet portion.

That is, the driving unit 30 comprises the first and the second tracking coils 31 and 32 and the focusing coil which are held in the movable portion 10 and the first and the second yokes 36 and 37 and the first and the second permanent magnets 38 and 39 which are mounted in the fixed portion 20. By means of the driving unit 30, the movable portion 10 can move as regards the fixed portion 20 (the actuator base 21) up and down (the focusing direction) A and right and left (the tracking direction) B.

When current flows in the first and the second tracking coils 31 and 32 and the focusing coil, the driving unit 30 drives the movable portion 10 by action of magnetic flux from the first and the second fixed magnetic portions so as to relatively move as regards the fixed portion 20 (the actuator base 21) and results in regulating a focus and a tracking.

The damper base 22 has four hollow portions 22a at the four corners that allows other ends of the four suspension wires 34 to pass therethrough. Inside the hollow portions 22a, damping material for suppressing vibrations of the suspension wires 34 is injected. A rear wall of the damper base 22 has four holes (not shown) for passing through the other ends 34b of the four suspension wires 34 at the four hollow portions 22a. That is, the another end 34b of each suspension wire 34 passes through the hole of the hollow portion 22a of the damper base 22 and extends from the rear wall of the damper base 22.

In the example being illustrated, liquid crystal polymer 40 shown in Fig. 1 is used as material of the movable portion 10 (the holding portion 13). In the manner which is described above, the liquid crystal polymer 40 is particular material having nature where the surface layer 41 is hard and the inside layer 42 is soft on injection molding.

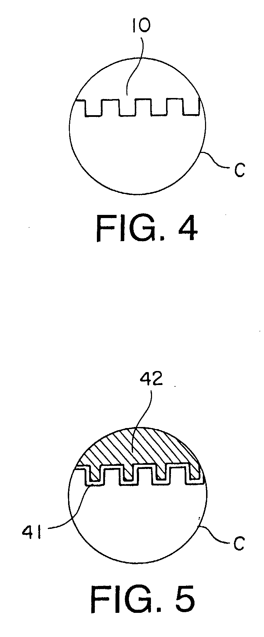

Figs. 4 and 5 shows a portion C enclosed with a circle in Fig. 2 with the portion C enlarged. Fig. 4 is an enlarged detail of the portion C. Fig. 5 is an enlarged sectional view of the portion C.

As shown in Fig. 4, the movable portion 10 has a wavelike shape so that the surface area thereof is larger than that of a flat surface. In the example being illustrated, a part projected from a surface (a convex part) has a width of about 1mm while a dent part (a concave part) has a width of about 1mm. Accordingly, the wavelike shape has a pitch of about 2mm. To mold such as a product having a surface of a wavelike shape it is necessary only to work an inner wall surface of a die (mold) for use in manufacturing the movable portion 10 into a wavelike shape.

As shown in Fig. 5, it is therefore possible to make a ratio of the surface layer (skin) 41 in the total of volume of the movable portion 10 higher in comparison with a case where the movable portion has a flat surface. As a result, it is possible to effectively arise the stiffness of the movable portion 10 without increasing volume and weight of the movable portion 10.

While this invention has thus far been described in conjunction with a preferred embodiment thereof, it will now be readily possible for those skilled in the art to put this invention into various other manners. For example, although the surface shape of the movable portion 10 is a rectangular wavelike shape in the above-mentioned embodiment, the surface shape of the movable portion 10 is not restricted to this and may be a sinusoidal wavelike shape, a shape having a lot of holes or projections, or the like. At any rate, the movable portion has a specific shape where a surface area thereof is larger than that of a flat shape. In addition, although description is exemplified in a case where the resin material of the movable portion 10 is the liquid crystal polymer (LCP) 40 in the above-mentioned embodiment, the resin material of the movable portion 10 is not restricted to this and may be particular material having a nature where a surface layer is harder than the inside on injection molding. Furthermore, although the description is made of a case where this invention is applicable for use in the movable portion in the optical pickup of the optical disc drive, it will be clear for those skilled in the art that it may be possible to apply (use) this invention on a general molding product.

Each feature disclosed in this specification (which term includes the claims) and/or shown in the drawings may be incorporated in the invention independently of other disclosed and/or illustrated features. Reference numerals appearing in the claims are by way of illustration only and shall be disregarded when interpreting the scope of the claims.

The text of the abstract filed herewith is repeated here as part of the specification.

An optical pickup actuator includes a movable portion, including a lens holder for holding an object lens, and also includes a damper base for supporting the movable portion through a plurality of suspension wires extending from both sides thereof to allow the movable portion to shift up and down and right and left. The movable portion is made of a liquid crystal polymer which is material having, after being injection molded, a surface layer harder than a region interior of the surface layer. The movable portion has a non-flat surface (a wavelike surface shape) with a surface area larger than if it were flat.

This application claims priority from Japanese Patent Application No. JP 2002/18289, the disclosure of which is incorporated herein by reference.

## Claims

1. An injection-molded product (10), made of a material which has a surface layer which is harder than a region interior of the surface layer,
**characterized in that** said molded product has a non-flat surface with a surface area larger than if it were flat.

2. An injection-molded product as claimed in claim 1, wherein the material of said molded product is liquid crysal polymer (40).

3. An injection-molded product as claimed in claim 1, wherein said molded product has a wavelike surface shape.

4. An optical pickup actuator comprising:
a movable portion (10) including a lens holder (12) for holding an object lens (11); and,
a damper base (22) for supporting said movable portion through a plurality of suspension wires (34) to allow said movable portion to shift up and down and right and left, said suspension wires extending from both sides of said movable portion;
**characterized in that** said movable portion is an injection-molded product according to any preceding claim.
